# EUROPEAN PATENT SPECIFICATION

(11) **EP 2 551 397 B1**
(45) Date of publication and mention of the grant of the patent: **31.08.2022**
(21) Application number: 12177832.8
(22) Date of filing: 25.07.2012
(51) Int. Cl.: D06F 37/26

(54) **A washing machine having enhanced coupling structure of a weight balance and assembly method of the same**
Waschmaschine mit verbesserter Kopplungsstruktur einer Ausgleichsvorrichtung und Montageverfahren dafür
Machine à laver présentant une structure de couplage d'un dispositif d'équilibrage et procédé d'assemblage de celle-ci

(30) Priority: 25.07.2011 KR 20110073505
(43) Date of publication of application: 30.01.2013
(73) Proprietor: Samsung Electronics Co., Ltd., Suwon-si, Gyeonggi-do, 443-742 (KR)
(72) Inventor: Gweon, Tae Sung, Gyeonggi-do (KR); Jo, Young Chul, Gyeonggi-do (KR); Yoo, Seung Wan, Gyeonggi-do (KR)
(74) Representative: Grünecker Patent- und Rechtsanwälte PartG mbB

(56) References cited:
- EP-A1- 1 961 855
- DE-A1-102006 010 788
- DE-B3-102006 051 714
- US-A1- 2011 000 265
- US-B1- 6 497 543
- US-B1- 6 913 666
- KUMAR S ET AL: "Application of ultrasonic vibrations in welding and metal processing: A status review", JOURNAL OF MANUFACTURING PROCESSES, SOCIETY OF MANUFACTURING ENGINEERS, DEARBORN, MI, US, vol. 26, 16 March 2017 (2017-03-16), pages 295-322, XP085000035, ISSN: 1526-6125, DOI: 10.1016/J.JMAPRO.2017.02.027

## Description

### BACKGROUND

### 1. Field

Example embodiments of the present disclosure relate to a washing machine, and more particularly, a washing machine having enhanced coupling structure of a tub and a weight balance of a washing machine.

### 2. Description of the Related Art

In general, a washing machine is an apparatus that is configured to remove stains from laundry or unclean substances using a chemical disintegration and a mechanical impact. Among such apparatuses, a drum washing machine, compared with a pulsator washing machine, is capable of reducing an entire height, and also is capable of having more laundry capacity, and has nearly no occurrence of having a twisted cloth, and thereby a demand of such an apparatus is gradually increasing. In general, a drum washing machine includes a tub which stores a cleaning water, a rotating tub which is rotatively installed at an inside of the tub, and a motor which is configured to drive the rotating tub to rotate. In a state when a laundry and the cleaning water is input in the rotating tub and the rotating tub rotates by the motor, a cleaning is performed by using the force of the laundry ascended and descended by a lifter.

In general, in the washing machine, in order to reduce the vibration occurring in the tub during a spin-dry process, a weight balance or a damper is fixed to one side of the front surface and a surface of the outer side. The weight balance is configured for reducing the vibration of the tub, but develops noise according to the change in temperature or a vibration, and therefore, a skilled technician is needed for coupling the weight balance to the tub as well as a relatively longer connecting time.

EP 1 961 855 A1 discloses a washing machine with a counter balance weight fixing system. The washing machine has a tub and at least a counterbalance weight. The counterbalance weight is attached to the tub by means of detachable screw connections comprising pin-shaped protrusions integral with the tub and with a shape corresponding to through openings provided in the counterbalance weight. Self-tapping screw is used to fix the counterbalance weight to the tub.

DE 10 2006 051 714 B3 discloses a washing machine with a tub and a counterbalance weight attached to the tub by a screw connection.

US 2011/0000265 A1 discloses an anchoring system of counterweights for washers. A corresponding washer comprises cylindrical body and a drum rotatably supported therein. Concrete counterweights are anchored in external position on the tub using a series of cylindrical divaricable pins. Each counterweight comprises a hole into which corresponding pins are inserted.

DE 10 2006 010 788 A1 discloses a washing machine with a tub and counterweights imbedded in a plastic body. The corresponding counterweights are fixed to the tub by plastic welding method to obtain permanent and stable connection.

### SUMMARY

It is an object of the present disclosure, with respect to a washing machine having a weight balance coupled to a tub in order to reduce a vibration of the washing machine, to provide the washing machine having enhanced coupling structure of the weight balance and the tub. Additional aspects of the disclosure will be set forth in part in the description which follows and, in part, will be obvious from the description, or may be learned by practice of the disclosure. This object is solved by the features of the independent claims.

Advantageous embodiments are disclosed by the subclaims.

The pin head may include a bottom surface which is facing the weight balance, and the bottom surface of the pin head may further include a balance weld metal zone which is metal-welded to the weight balance for the pin to be fixed to the weight balance.

The boss may further include a protrusion surface which is facing the bottom surface of the pin, and a gap may be formed between the bottom surface of the pin and the protrusion surface of the boss.

The boss may include a coupling boss that is inserted at the insertion hole of the weight balance and a support boss that is expanded with respect to the coupling boss for supporting the bottom surface of the weight balance.

A settling unit may be formed at least at an outer surface of the weight balance for the balance weld metal zone of the pin to be settled.

The boss further includes a protrusion surface which is facing the bottom surface of the pin, and the distance between the support boss and the bottom surface of the pin may be greater than the distance between the support boss and the protrusion surface of the boss.

The weight balance may further include a recess which is configured to accommodate at least one portion of the support boss.

At least one or more of the weld metal zone of the pin may include a first weld metal zone which is extended from the pin head and a second weld metal zone, which is extended, in a slanted manner, with respect to the outer surface of the first weld metal zone.

The outer surface of the second weld metal zone may be extended, in a slanted manner, toward the center of the pin.

The pin may further include an assembly guide which is configured to guide the insertion by being extended from at least one or more of the boss weld metal zone.

At least one or more of the boss weld metal zone of the pin may include a first metal weld zone which is extended from the pin head and a second weld metal zone which is extended in a stepped manner with respect to the outer surface of the first weld metal zone.

At least one portion of the outer surface of the bottom surface at which the pin head is facing the weight balance may be protruded toward the direction of the weight balance rather than toward the inner side of the bottom surface.

The diameter of the boss weld metal zone of the pin may be larger than the diameter of the coupling hole before the pin is coupled to the boss.

The assembly method of the weight balance of the washing machine may further include the metal-welding of the head of the pin to the weight balance.

The pin may include a first weld metal zone which is extended from the pin head and metal-welded to the coupling hole and a second weld metal zone, which is extended, in a slanted manner, with respect to the outer surface of the first weld metal zone and metal-welded to the coupling hole.

The pin may be fixed to the boss though an ultrasonic weld metal.

The enhanced coupling structure of a tub and a weight balance enables an improvement in cost reduction and productivity, as well as in assemblage, and in addition, enables a production of a product having uniformed quality regardless of the skill of an operator.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a side-sectional view of a structure of a washing machine in accordance with an example embodiment of the present disclosure.
FIG. 2 is a perspective view illustrating the washing machine after omitting a partial component in accordance with an example embodiment of the present disclosure.
FIG. 3 is a frontal view illustrating a coupled state of a tub and a weight balance in the washing machine in accordance with an example embodiment of the present disclosure.
FIG. 4 is an exploded perspective view illustrating the tub and weight balance separated from the washing machine in accordance with an example embodiment of the present disclosure.
FIG. 5 is a view illustrating a coupled state of a boss and a pin of the tub.
FIG. 6 is a view illustrating the pin in accordance with an example embodiment of the present disclosure.
FIG. 7 is a view illustrating a cross-section of a portion 'A' on FIG. 3.
FIG. 8 is an exploded perspective view illustrating a separated state of the pin, the weight balance, and the boss illustrated on FIG. 7.
FIG. 9 is a view, with respect to the cross-section of the portion 'A' on FIG. 3, illustrating a case of the pin is used in accordance with another example embodiment of the present disclosure.
FIG. 10 is a cross sectional view illustrating a portion 'A' of FIG. 3 adopted with a pin in accordance with another example embodiment of the present disclosure.

### DETAILED DESCRIPTION

Reference will now be made in detail to the embodiments of the present disclosure, examples of which are illustrated in the accompanying drawings, wherein like reference numerals refer to like elements throughout.

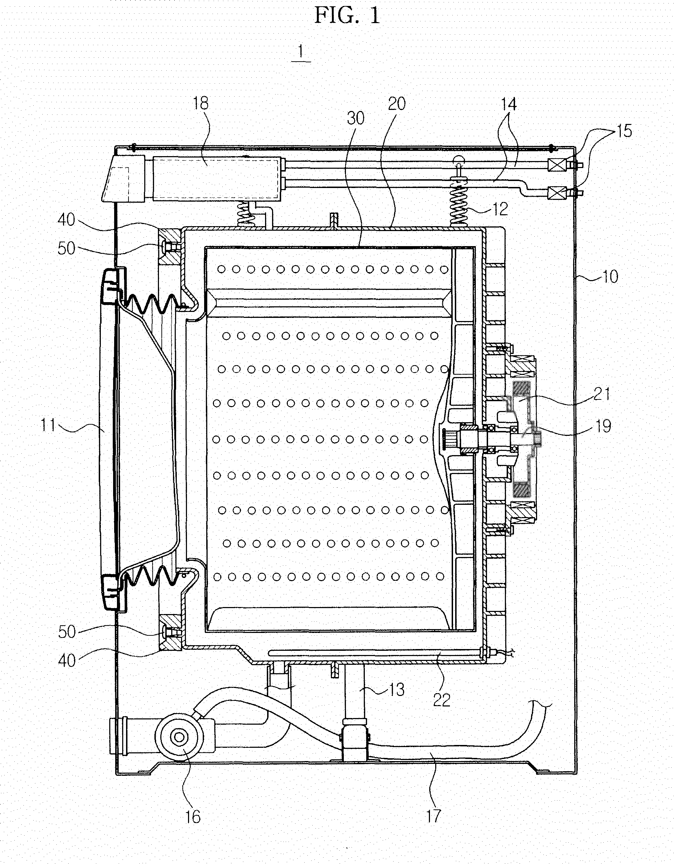

FIG. 1 is a side-sectional view of a structure of a washing machine in accordance with an embodiment of the present disclosure.

As illustrated on FIG. 1, a washing machine 1 includes a cabinet 10 which is configured to form an exterior, a tub 20 which is disposed at an inside of the cabinet 10 and configured to accommodate a cleaning water, and a rotating tub 30 which is rotatively installed at the inside of the tub 20 and configured to accommodate a laundry. The rotating tub 30 is equipped with several holes.

An input opening which is configured for the laundry to be input into the inside of the rotating tub 30 is provided at the front surface of the cabinet 10. A door 11 which is configured to be capable of opening/closing by a door hinge assembly (not shown) in order to prevent the laundry from escaping from the rotating tub 30 is installed at the cabinet 10. At the outer side of the tub 20, a spring 12 and a damper 13 may be equipped at an upper and a lower side of the tub 20, respectively, for supporting the tub 20 at the inside of the cabinet 10.

A water supply hose 14 which is configured to guide a cleaning water to the tub 20 and a water supply valve 15 which is configured to open/close the water supply hose 14 are installed at the upper side of the cabinet 10, a draining pump 16 and a draining hose 17 are installed at the lower side of the cabinet 10 for discharging the cleaning water filled at the tub 20 to outside, and a detergent container 18 is equipped at the upper side of the front of the cabinet 10. The water supply valve 15 and the detergent container 18 are connected through the water supply hose 14. The water supplied through the water supply valve 15 is supplied to the detergent container 18 through the water supply hose 14, and the water being supplied through the water supply valve 15 is put in to the inside of the tub 20 along with the detergent.

A motor 21 which is connected to the rotating tub 30 by a rotating shaft 19 and configured to rotate the rotating tub 30 is installed at the rear of the tub 20, and a heater 22 which is configured to control the temperature of the cleaning water filled at the inside of the tub 20 is installed at the lower side of the tub 20.

A weight balance 40 which is configured to reduce the vibration of the tub 20 that occurs in a spin-dry process and balance the center of gravity of the tub 20 is installed at the front of the tub 20. Since the weight of the weight balance 40 is heavy, a particular coupling member is required for the assembly of the weight balance 40 and the tub 20. Therefore, with reference to coupling the weight balance 40 and the tub 20 using the coupling member, a skilled technician is needed. Furthermore, the working hour with respect to the working process is needed at about 18 seconds to 24 seconds, thereby requiring a relatively long time.

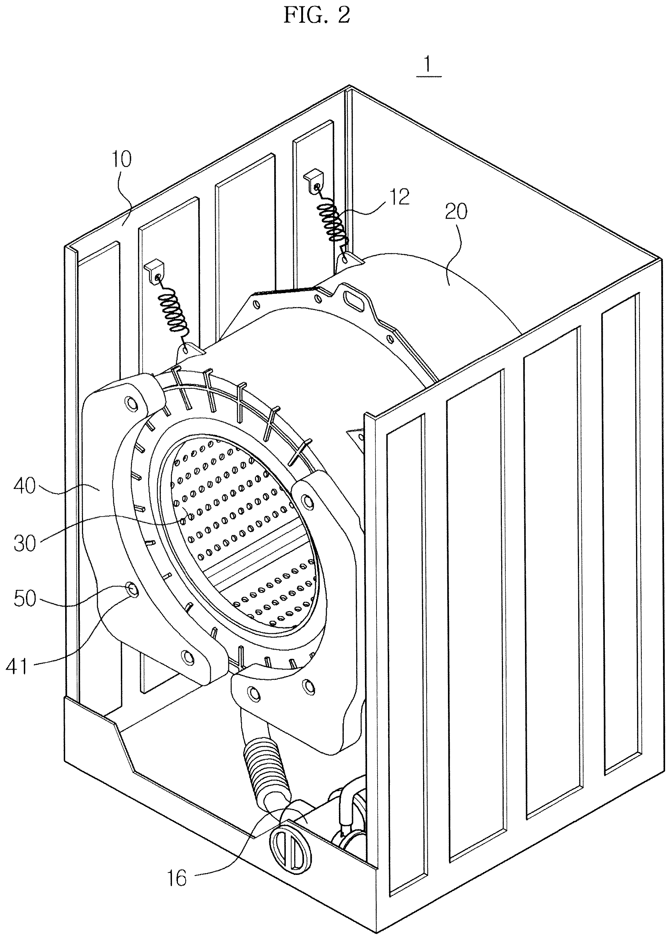

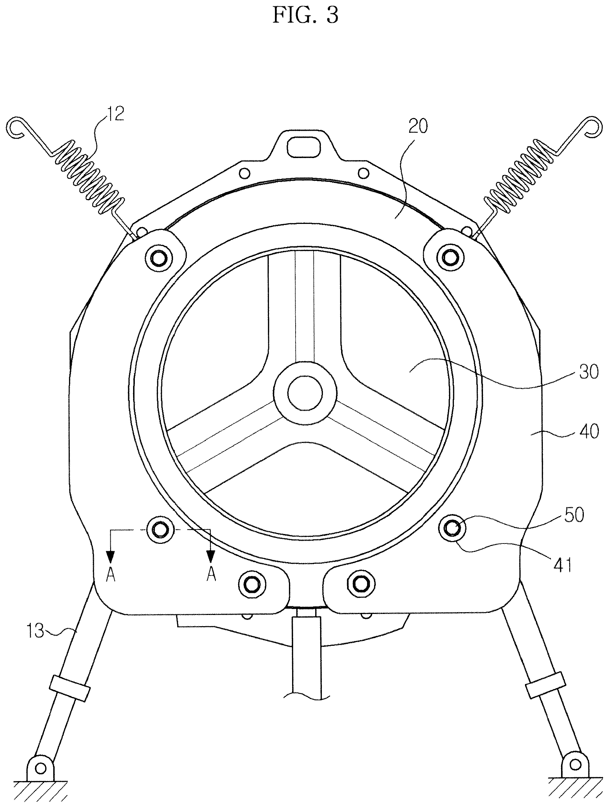

FIG. 2 is a perspective view illustrating the washing machine after omitting a partial component in accordance with the embodiment of the present disclosure. FIG. 3 is a frontal view illustrating a coupled state of the tub 20 and the weight balance 40 in the washing machine in accordance with the embodiment of the present disclosure.

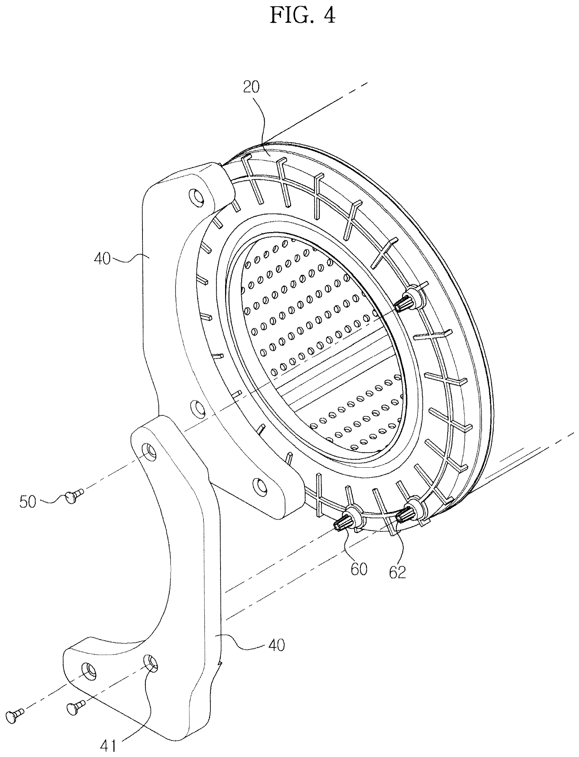

As illustrated on FIGS. 2 to 3, the tub 20 and the weight balance 40 are assembled by a pin 50, that is, a coupling member. The weight balance 40 is assembled to the tub 20, and as illustrated, the weight balance 40 is not limited to be assembled at the front surface of the tub 20, but also at the upper surface, the lower surface, and the side surface, for example. The weight balance 40 is coupled to the tub 20 through a boss 60 (refer to FIG. 4) which is formed in a protruding manner. At least one insertion hole 41 which is formed at the weight balance 40 and a coupling hole 62 (refer to FIG. 4) which is formed at the boss 60 may be formed, and the number of such is not limited thereto by the drawing illustrated.

The coupling of the weight balance 40 and the tub 20 may be disposed by using a weld metal, and the coupling of the weight balance 40 and the tub 20 by the weld has an advantage of being uniformly disposed by a weld metal facility. More particularly, when the coupling of the weight balance 40 and the tub 20 is disposed by using an ultrasonic weld metal, the total time consumed for the coupling is about 9 seconds, as compared to the total time consumed for the coupling by using a conventional coupling member, such as a screw, which is about 24 seconds, thereby reducing the coupling time may be possible. Therefore, in a case of using the weld metal for coupling of the weight balance 40 and the tub 20, no particular screw is needed for use, thereby an improvement in reducing material cost and improving productivity may be possible.

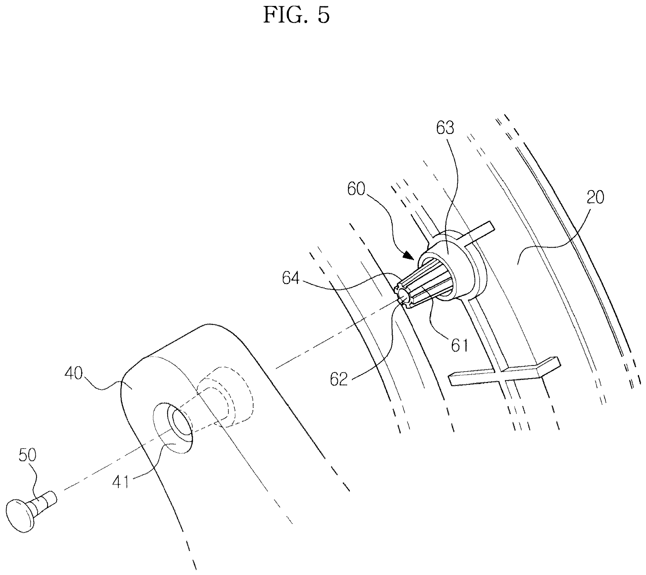

FIGS. 4 to 5 are exploded perspective views illustrating the tub and weight balance separated from the washing machine in accordance with the embodiment of the present disclosure. The boss 60 is a portion where the weight balance 40 is being assembled to the tub 20, and at least one or more of the boss 60 is provided in a protruded manner at the tub 20. The boss 60 includes the coupling hole 62 where the pin is inserted. The boss 60 includes a coupling boss 64 which is inserted at the insertion hole 41 of the weight balance 40, and a support boss 63 which is expanded with respect to the coupling boss 64 for supporting the bottom surface of the weight balance 60 inserted at the boss 60. The support boss 63 is extended from the tub 20, and the coupling boss 64 is extended from the support boss 63. The boss 60, for improving the coupling strength of the weight balance 40 and the boss 60, is desired to be equipped with a groove 61. The shape of the outer surface of the boss 60 may be formed in a slanted manner or in a linear manner.

The weight balance 40 includes the insertion hole 41 for the boss 60 to be mounted. The boss 60 is mounted through the insertion hole 41, and the pin 50 is inserted at the coupling hole 62 provided at the boss 60 and coupled through the weld metal. The coupling structure of the weight balance 40 and the boss 60 will be described later.

Although the shape of the pin 50 is not limited to the shape illustrated on the drawing, the diameter of the upper portion of such may be larger than that of the lower portion. In addition, for the efficiency of the weld metal, the diameter of the weld metal zone of the pin 50 may be larger than that of the coupling hole 62. By having a certain portion of the pin 50 fused as a result of the weld metal, the pin 50 is completely being coupled to the weight balance 40 and the boss 60.

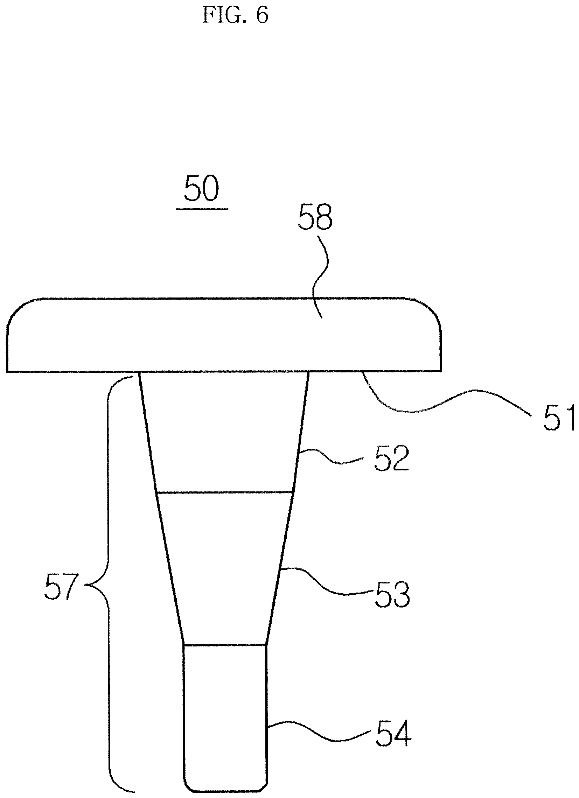

FIG. 6 is a view illustrating the pin in accordance with the embodiment of the present disclosure. The pin 50 may be provided in a form of having a pin body 57 and a pin head 58 which is expanded from the pin body 57 for preventing the weight balance 40 coupled to the boss 60 from separating away.

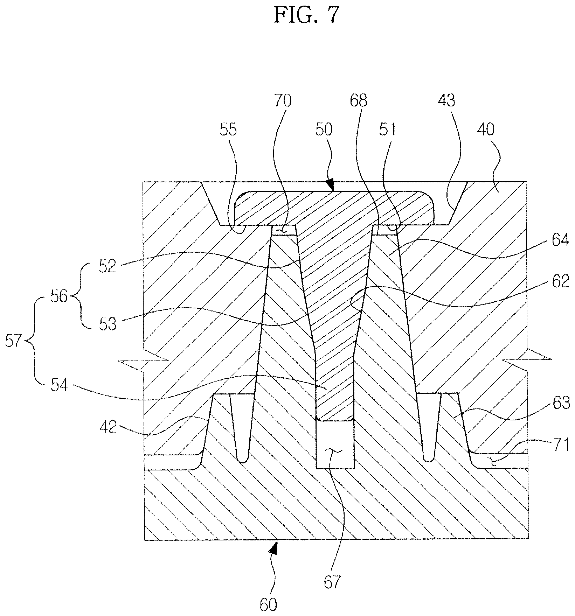

The pin 50 may be equipped with a boss weld metal zone 56 (refer to FIG. 7), which is metal-welded to the coupling hole 62 of the inner surface of the boss 60. The boss weld zone 56 is provided at the pin body 57. The boss metal weld zone 56 may be classified as a first metal weld zone 52 and a second metal weld zone 53. The second metal weld zone 53 may be equipped with a slanted surface, which is extended, in a slanted manner, with respect to the outer surface of the first metal weld zone 52. In addition, the pin 50 may include an assembly guide 54 which is extended from the boss metal weld zone 56 and configured to guide an insertion of the pin 50 to the coupling hole 62. The assembly guide 54 is configured for the pin 50 to be easily inserted at the coupling hole 62, and in a case of an assembly of the tub 20 and the weight balance 40, the pin 50 is inserted into the boss 60 through the assembly guide 54 of the pin 50. Therefore, the assembly guide 54 may have a smaller diameter than the coupling hole 62 for guiding the coupling of the pin 50 and the boss 60. The first metal weld zone 52 is provided by being extended from the pin head 58, and the second metal weld zone 53 is provided by being extended, in a slanted manner, from the outer surface of the first metal weld zone 52. The material of the pin 50 may be made of plastic.

In a case of a fusion of the pin 50, a bottom surface 51, the first metal weld zone 52, and the second metal weld zone 53 may be fused.

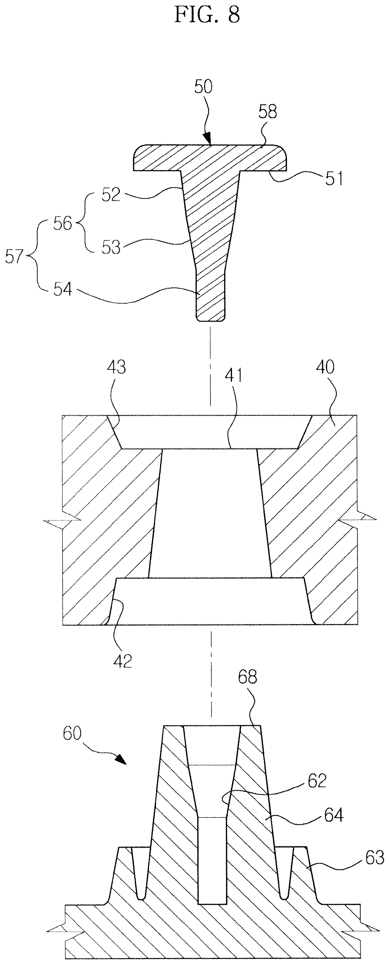

FIG. 7 is a view illustrating a cross-section of a portion 'A' on FIG. 3. FIG. 8 is an exploded perspective view illustrating a separated state of the pin, the weight balance, and the boss illustrated on FIG. 7.

As illustrated on FIGS. 7 to 8, the weight balance 40 and the boss 60 are mounted through the insertion hole 41, and the pin 50 is inserted and metal-welded at the coupling hole 62 which is equipped at the boss 60 that is formed in a protruded manner, thereby coupling the weight balance 40 at the tub 20.

As the weight balance 40 is mounted at the boss 60, the outer shape of the coupling boss 64 and the shape of the insertion hole 41 equipped at the weight balance 40 are provided in a corresponding manner.

The shape of the coupling hole 62 is changed according to the shape of the pin 50, and thereby the shape is not limited.

The coupling boss 64 of the boss 60 is mounted at the insertion hole 41 which is equipped at the weight balance 40, and the pin body 57 is mounted at the coupling hole 62 of the boss 60. A portion of the bottom surface 51 among the pin head 58 that faces the weight balance 40 may be metal-welded at the weight balance 40. A balance weld metal 55 may be provided at the bottom surface of the pin head 58. The pin body 57 is equipped with the weld metal zone 56 which is metal-welded at the inner surface of the coupling hole 62. The first weld metal zone 52 and the second weld metal zone 53 may be classified as the boss weld zone 56. The boss 60 includes a protrusion surface 68 which is facing the bottom surface 51 of the pin head 58, and the gap 70 may be provided between the bottom surface 51 of the pin head 58 and the protrusion surface 68 of the boss 60. That is, the gap 70 is formed between the pin head 58 and the coupling boss 64 in a state of the weight balance 40 and the boss 60 are mounted. The gap 70 is configured to enable the coupling of the weight balance 40 and the pin head 58. The support boss 63 which is extendedly formed from the tub 20 is coupled to one portion of the weight balance 40. A recess 42 is provided at a portion of the weight balance 40 which is coupled to the support boss 63 for accommodating at least a portion of the support boss 63. A settling unit 43 may be included for the pin head 58 to be settled at least at one portion of the outer surface of the weight balance 40 with which the weight balance 40 and the balance weld metal zone 55 make contact. In addition, the pin body 57 is inserted into the coupling hole 62, and the pin 50, since the pin head 58 and the settling unit 43 are in contact, is not inserted by no more than a certain portion. Therefore, a pore 67 at which the pin body 57 is not inserted remains at the coupling hole 62. In addition, an opening 71 may exist between the weight balance 40 facing the tub 20 and the tub 20.

When the pin 50 is inserted and metal-welded at the coupling hole 62, the balance weld metal zone 55 of the pin 50 is being coupled at the upper portion of the weight balance 40, and the boss weld metal zone 56 having the first weld metal zone 52 and the second weld metal zone is being coupled at the inside of the coupling hole 62.

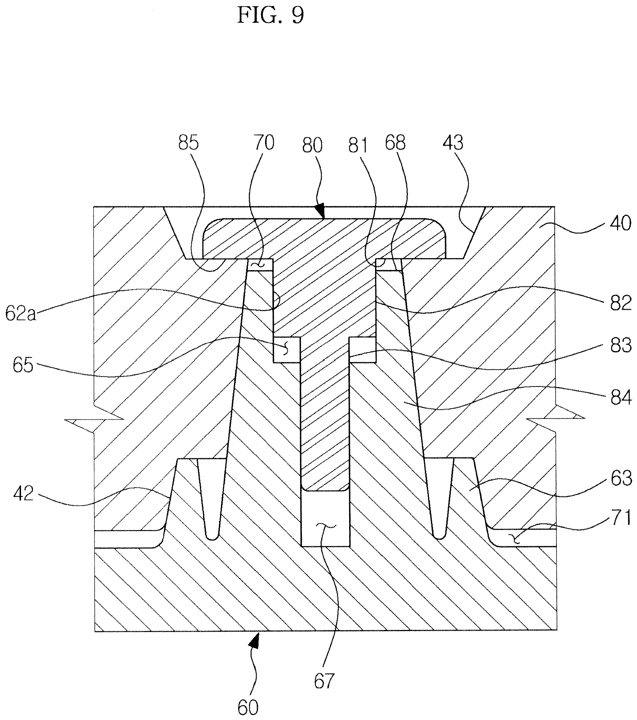

FIG. 9 is a view, with respect to the cross-section of the portion 'A' on FIG. 3, illustrating when the pin is used in accordance with another embodiment of the present disclosure.

When compared with the embodiment of FIG. 7, the embodiment of FIG. 9 shows a difference with reference to a first weld metal zone 82 and a second weld metal zone 83 of the pin body 57.

On the boundary of the first weld metal zone 82 and the second weld metal zone 83 of the pin body 57, the first weld metal zone 82 is more protruded than the second weld metal zone 83. The boundary of the second weld metal zone 83 and the assembly guide 54, as illustrated on FIG. 9, may be formed in a straight line, and also in a stepped manner or a slanted manner. In a case of the first weld metal zone 82 and the second weld metal zone 83 are provided in a stepped manner, the coupling strength of the boss 60 and the body of a pin 80 may be increased, and such may increase the coupling strength of the weight balance 40 and the tub 20. In addition, in a case of the first weld metal zone 82 and the second weld metal zone 83 are formed in a stepped manner, a fluid flowing down as a result of the fusion of the pin 80 is gathered at a fluid standing space 65 which is a space formed as a result of the steps between the inner wall of the boss 60 and the boss weld metal zone 56, thereby increasing coupling strength.

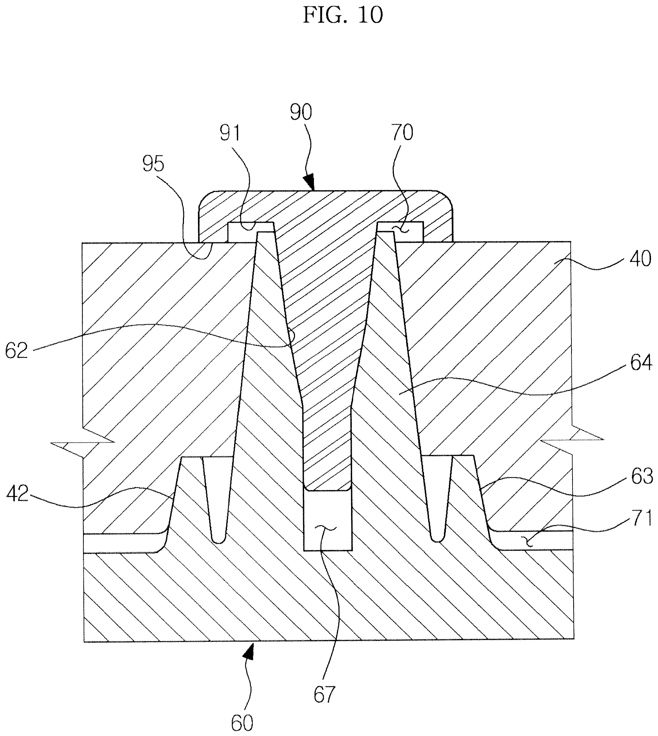

FIG. 10 is a cross sectional view illustrating a portion 'A' of FIG. 3 adopted with a pin in accordance with another embodiment of the present disclosure.

As illustrated on FIG. 10, a pin 90 in accordance with the one embodiment of the present disclosure, when compared with another embodiment, shows a difference with respect to the pin head 58. The pin 90, at least by more than a certain portion of the outer side portion of the pin head 58, is protruded toward the side surface of the weight balance 40 which is facing the pin head 58. Accordingly, in a case of a metal-welding, a balance weld metal zone 95 may be precisely limited, and an advantage exists in having the fluid generated as a result of a fusion of a portion of the pin 90 at between the inner side portion of the pin 90 and the coupling boss 64. In addition, with respect to the shape of the boss 60, in order for the gap 70 to be formed between the protrusion surface 68 and at least at one portion of the inner side of the bottom surface 91 of the pin 90, the support boss 63 does not need to be separately equipped. Therefore, administering liquidity on the shape of the boss 60 may be possible.

Although a few embodiments of the present disclosure have been shown and described, it would be appreciated by those skilled in the art that changes may be made in these embodiments without departing from the principles of the disclosure, the scope of which is defined in the claims.

## Claims

1. A washing machine (1), comprising:
a tub (20) configured to accommodate water at an inside;
a rotating tub (30) disposed at the inside of the tub (20);
at least one or more of a boss (60) protruded from the tub (20) and equipped with a coupling hole (62);
a weight balance (40) equipped with at least one or more of a insertion hole (41), in which the at least one or more of the boss (60) is inserted;
**characterized by**
a pin (50, 80, 90) comprising a pin body (57), inserted in the coupling hole (62) of the boss (60), and a pin head (58), which is extended from the pin body (57) for preventing the weight balance from separating away, and
the pin body (57) comprising at least one or more of a boss weld metal zone (52, 53), which is metal welded at the inner surface of the coupling hole (62) for the pin to be fixed to the at least one or more boss.

2. The washing machine of claim 1, wherein:
the pin head (58) comprises a bottom surface (51, 81) which is facing the weight balance (40), and
the bottom surface (51, 81) of the pin head further comprises a balance weld metal zone (55, 85, 95) which is metal welded to the weight balance (40) for the pin to be fixed to the weight balance.

3. The washing machine of claim 2, wherein:
the at least one or more boss (60) further comprises a protrusion surface (68) which is facing the bottom surface (51, 81, 91) of the pin, and
a gap (70) is formed between the bottom surface of the pin and the protrusion surface of the boss.

4. The washing machine of claim 2, wherein:
the at least one or more boss comprises a coupling boss (64) which is inserted at the insertion hole (41) of the weight balance (40) and a support boss (63) which is expanded with respect to the coupling boss (64) for supporting the bottom surface of the weight balance (40), and the weight balance further comprises a recess (42) which is configured to accommodate at least one portion of the support boss (63).

5. The washing machine of claim 2, wherein:
a settling unit (43) is formed at least at an outer surface of the weight balance (40) for the balance weld metal zone of the pin to be settled.

6. The washing machine of claim 2, wherein:
the at least one or more boss (60) further comprises a protrusion surface (68) which is facing the bottom surface (51) of the pin (50), and
the distance between the support boss (63) and the bottom surface of the pin is greater than the distance between the support boss (63) and the protrusion surface (68) of the boss.

7. The washing machine of claim 1, wherein:
at least one or more of the boss weld metal zone (56) of the pin comprises a first weld metal zone (52) which is extended from the pin head (58) and a second weld metal zone (53), which is extended, in a slanted manner, with respect to the outer surface of the first weld metal zone (52).

8. The washing machine of claim 1, wherein:
the pin (50) further comprises an assembly guide (54) which is configured to guide the insertion by being extended from at least one or more of the boss weld metal zone.

9. The washing machine of claim 1, wherein:
at least one or more of the boss weld metal zone (81, 82) of the pin (80) comprises a first weld metal zone (82) which is extended from the pin head and a second weld metal zone (83) which is extended in a stepped manner with respect to the outer surface of the first weld metal zone.

10. The washing machine of claim 1, wherein:
at least one portion of the outer surface of the bottom surface (91) at which the pin head is facing the weight balance (40) is protruded toward the direction of the weight balance.

11. An assembly method of a weight balance (40) of a washing machine (1), comprising:
coupling of a weight balance (40) to a boss (60) provided at a tub (30) of a washing machine,
**and characterized by the further steps of:**
settling of a pin head at the weight balance by inserting a body of a pin (50, 80, 90) at a coupling hole (62) provided at the boss (60); and
metal welding of a body of the pin (50, 80, 90) to the coupling hole (62) for fixing the weight balance to the boss (60).

12. The assembly method of the weight balance of the washing machine of claim 11, **characterized by**
metal welding the head of the pin to the weight balance (40).

13. The assembly method of the weight balance of the washing machine of claim 12, wherein:
a gap (70) is formed between a bottom surface (51) of the pin head (58) and the protrusion surface (68) of the boss (60).

14. The assembly method of the weight balance of the washing machine of claim 11, wherein:
the pin (50, 80, 90) comprises a first weld metal zone (52), which is extended from the pin head (58) and metal welded to the coupling hole (62), and a second weld metal zone (53), which is extended, in a slanted manner, with respect to the outer surface of the first weld metal zone (52) and metal welded to the coupling hole (62).

15. The assembly method of the weight balance of the washing machine of claim 11, further comprising:
the pin (50, 80, 90) is fixed to the boss (60) by using an ultrasonic weld metal.

## Patentansprüche

1. Waschmaschine (1), umfassend:
eine Trommel (20), die dazu konfiguriert ist, Wasser im Inneren aufzunehmen;
eine drehbare Trommel (30), die im Inneren der Trommel (20) angeordnet ist;
mindestens einen oder mehrere Vorsprünge (60), die aus der Trommel (20) vorstehen und mit einem Verbindungsloch (62) versehen sind;
ein Auswuchtgewicht (40), das mit mindestens einem oder mehreren Einführungslöchern (41) ausgestattet ist, in die der mindestens eine oder mehrere Vorsprünge (60) eingeführt werden;
**gekennzeichnet**
**durch** einen Stift (50, 80, 90), umfassend einen Stiftkörper (57), der in das Verbindungsloch (62) des Vorsprungs (60) eingesetzt wird, und einen Stiftkopf (58), der sich von dem Stiftkörper (57) aus erstreckt, um zu verhindern, dass sich das Auswuchtgewicht ablöst, und
**dadurch,** dass der Stiftkörper (57) mindestens eine oder mehrere Vorsprungs-Aufschmelzzonen (52, 53) umfasst, die an der Innenfläche des Verbindungslochs (62) metallgeschweißt sind, damit der Stift an der mindestens einen oder mehreren Vorsprüngen befestigt werden kann.

2. Waschmaschine nach Anspruch 1, wobei:
der Stiftkopf (58) eine untere Fläche (51, 81) umfasst, die dem Auswuchtgewicht (40) zugewandt ist, und
die untere Fläche (51, 81) des Stiftkopfes außerdem eine Gewichts-Aufschmelzzone (55, 85, 95) umfasst, die an das Auswuchtgewicht (40) metallgeschweißt ist, damit der Stift an dem Auswuchtgewicht befestigt werden kann.

3. Waschmaschine nach Anspruch 2, wobei:
die mindestens einen oder mehreren Vorsprünge (60) des Weiteren eine vorstehende Fläche (68) umfassen, die der unteren Fläche (51, 81, 91) des Stifts zugewandt ist, und
ein Spalt (70) zwischen der unteren Fläche des Stifts und der vorstehenden Fläche des Vorsprungs ausgebildet ist.

4. Waschmaschine nach Anspruch 2, wobei:
die mindestens einen oder mehreren Vorsprünge einen Kupplungsvorsprung (64) umfassen, der in das Einführungsloch (41) des Auswuchtgewichts (40) eingesetzt wird, und einen Stützvorsprung (63), der in Bezug auf den Kupplungsvorsprung (64) erweitert ist, um die untere Fläche des Auswuchtgewichts (40) zu stützen,
und das Auswuchtgewicht des Weiteren eine Aussparung (42) umfasst, die dazu konfiguriert ist, mindestens einen Teil des Stützvorsprungs (63) aufzunehmen.

5. Waschmaschine nach Anspruch 2, wobei:
mindestens an einer Außenfläche des Auswuchtgewichts (40) eine Absetzeinheit (43) für die abzusetzende Gewichts-Aufschmelzzone des Stiftes ausgebildet ist.

6. Waschmaschine nach Anspruch 2, wobei:
die mindestens einen oder mehreren Vorsprünge (60) des Weiteren eine vorstehende Fläche (68) umfassen, die der unteren Fläche (51) des Stifts (50) zugewandt ist, und
der Abstand zwischen dem Stützvorsprung (63) und der unteren Fläche des Stifts größer ist als der Abstand zwischen dem Stützvorsprung (63) und der vorstehenden Fläche (68) des Vorsprungs.

7. Waschmaschine nach Anspruch 1, wobei:
mindestens eine oder mehrere der Vorsprungs-Aufschmelzzonen (56) des Stifts eine erste Aufschmelzzone (52) umfassen, die sich vom Stiftkopf (58) aus erstreckt, und eine zweite Aufschmelzzone (53), die sich schräg zur Außenfläche der ersten Aufschmelzzone (52) erstreckt.

8. Waschmaschine nach Anspruch 1, wobei:
der Stift (50) des Weiteren eine Montageführung (54) umfasst, die so konfiguriert ist, dass sie das Einsetzen führt, indem sie sich von mindestens einer oder mehreren der Vorsprungs-Aufschmelzzonen erstreckt.

9. Waschmaschine nach Anspruch 1, wobei:
mindestens eine oder mehrere der Vorsprungs-Aufschmelzzonen (81, 82) des Stifts (80) eine erste Aufschmelzzone (82) umfassen, die sich vom Stiftkopf (58) aus erstreckt, und eine zweite Aufschmelzzone (83), die sich abgestuft zur Außenfläche der ersten Aufschmelzzone erstreckt.

10. Waschmaschine nach Anspruch 1, wobei:
mindestens ein Teil der Außenfläche der unteren Fläche (91), an der der Stiftkopf dem Auswuchtgewicht (40) zugewandt ist, in Richtung des Auswuchtgewichts vorsteht.

11. Montageverfahren für ein Auswuchtgewicht (40) einer Waschmaschine (1), umfassend:
Koppeln eines Auswuchtgewichts (40) an einen Vorsprung (60), der an einer Trommel (30) einer Waschmaschine vorgesehen ist,
und **gekennzeichnet durch** die folgenden weiteren Schritte:
Aufsetzen eines Stiftkopfes an dem Auswuchtgewicht **durch** Einsetzen eines Stiftkörpers (50, 80, 90) in ein an dem Vorsprung (60) vorgesehenes Verbindungsloch (62); und
Metallschweißen eines Stiftkörpers (50, 80, 90) an das Verbindungsloch (62) zur Befestigung des Auswuchtgewichts an dem Vorsprung (60).

12. Montageverfahren für das Auswuchtgewicht der Waschmaschine nach Anspruch 11,
**gekennzeichnet durch**
Metallschweißen des Stiftkopfes an das Auswuchtgewicht (40).

13. Montageverfahren für das Auswuchtgewicht der Waschmaschine nach Anspruch 12, wobei:
ein Spalt (70) zwischen einer unteren Fläche (51) des Stiftkopfes (58) und der vorstehenden Fläche (68) des Vorsprungs (60) ausgebildet ist.

14. Montageverfahren für das Auswuchtgewicht der Waschmaschine nach Anspruch 11, wobei:
der Stift (50, 80, 90) eine erste Aufschmelzzone (52) umfasst, die sich vom Stiftkopf (58) aus erstreckt und an das Verbindungsloch (62) geschweißt ist, und eine zweite Aufschmelzzone (53), die sich schräg zur Außenfläche der ersten Aufschmelzzone (52) erstreckt und an das Verbindungsloch (62) geschweißt ist.

15. Montageverfahren für das Auswuchtgewicht der Waschmaschine nach Anspruch 11, des Weiteren umfassend:
der Stift (50, 80, 90) wird mit Hilfe von Ultraschallschweißen an dem Vorsprung (60) befestigt.

## Revendications

1. Machine à laver (1), comprenant :
une cuve (20) configurée pour recevoir de l'eau à l'intérieur ;
une cuve rotative (30) disposée à l'intérieur de la cuve (20) ;
au moins un ou plusieurs bossages (60) faisant saillie depuis la cuve (20) et équipés d'un trou d'accouplement (62) ;
un contrepoids (40) équipé d'au moins un ou plusieurs trous d'insertion (41), où l'au moins un ou plusieurs bossages (60) sont insérés ;
**caractérisée par**
une broche (50, 80, 90) comprenant un corps de broche (57), insérée dans le trou d'accouplement (62) du bossage (60), et une tête de broche (58), qui s'étend depuis le corps de broche (57) pour empêcher la séparation du contrepoids, et
le corps de broche (57) comprenant au moins une ou plusieurs zones de métal de soudure de bossage (52, 53), qui est soudée par métal au niveau de la surface intérieure du trou d'accouplement (62) pour que la broche soit fixée à l'au moins un ou plusieurs bossages.

2. Machine à laver de la revendication 1, dans laquelle :
la tête de broche (58) comprend une surface inférieure (51, 81) qui fait face au contrepoids (40), et
la surface inférieure (51, 81) de la tête de broche comprend en outre une zone de métal de soudure de contrepoids (55, 85, 95) qui est soudée par métal au contrepoids (40) pour que la broche soit fixée au contrepoids.

3. Machine à laver de la revendication 2, dans laquelle :
l'au moins un ou plusieurs bossages (60) comprennent en outre une surface en saillie (68) qui fait face à la surface inférieure (51, 81, 91) de la broche, et
un espace (70) est formé entre la surface inférieure de la broche et la surface en saillie du bossage.

4. Machine à laver de la revendication 2, dans laquelle :
l'au moins un ou plusieurs bossages comprennent un bossage d'accouplement (64) qui est inséré au niveau du trou d'insertion (41) du contrepoids (40) et un bossage de support (63) qui est dilaté par rapport au bossage d'accouplement (64) pour supporter la surface inférieure du contrepoids (40),
et le contrepoids comprend en outre un évidement (42) qui est configuré pour recevoir au moins une partie du bossage de support (63).

5. Machine à laver de la revendication 2, dans laquelle :
une unité de pose (43) est formée au moins au niveau d'une surface extérieure du contrepoids (40) pour la zone de métal de soudure de contrepoids de la broche à poser.

6. Machine à laver de la revendication 2, dans laquelle :
l'au moins un ou plusieurs bossages (60) comprennent en outre une surface en saillie (68) qui fait face à la surface inférieure (51) de la broche (50), et
la distance entre le bossage de support (63) et la surface inférieure de la broche est supérieure à la distance entre le bossage de support (63) et la surface en saillie (68) du bossage.

7. Machine à laver de la revendication 1, dans laquelle :
au moins une ou plusieurs zones de métal de soudure de bossage (56) de la broche comprennent une première zone de métal de soudure (52) qui s'étend depuis la tête de broche (58) et une deuxième zone de métal de soudure (53) qui s'étend, de manière inclinée, par rapport à la surface extérieure de la première zone de métal de soudure (52).

8. Machine à laver de la revendication 1, dans laquelle :
la broche (50) comprend en outre un guide d'assemblage (54) qui est configuré pour guider l'insertion en s'étendant depuis au moins une ou plusieurs zones de métal de soudure de bossage.

9. Machine à laver de la revendication 1, dans laquelle :
au moins une ou plusieurs zones de métal de soudure de bossage (81, 82) de la broche (80) comprennent une première zone de métal de soudure (82) qui s'étend depuis la tête de broche et une deuxième zone de métal de soudure (83) qui s'étend d'une manière étagée par rapport à la surface extérieure de la première zone de métal de soudure.

10. Machine à laver de la revendication 1, dans laquelle :
au moins une partie de la surface extérieure de la surface inférieure (91) au niveau de laquelle la tête de broche fait face au contrepoids (40) fait saillie vers la direction du contrepoids.

11. Procédé d'assemblage d'un contrepoids (40) d'une machine à laver (1), comprenant :
coupler un contrepoids (40) à un bossage (60) prévu au niveau d'une cuve (30) d'une machine à laver,
**et caractérisé par les étapes supplémentaires consistant à :**
poser une tête de broche au niveau du contrepoids en insérant un corps d'une broche (50, 80, 90) au niveau d'un trou d'accouplement (62) prévu au niveau du bossage (60) ; et
souder par métal un corps de la broche (50, 80, 90) au trou d'accouplement (62) pour fixer le contrepoids au bossage (60).

12. Procédé d'assemblage du contrepoids de la machine à laver de la revendication 11,
**caractérisé par**
le soudage par métal de la tête de la broche au contrepoids (40).

13. Procédé d'assemblage du contrepoids de la machine à laver de la revendication 12, dans lequel :
un espace (70) est formé entre une surface inférieure (51) de la tête de broche (58) et la surface en saillie (68) du bossage (60).

14. Procédé d'assemblage du contrepoids de la machine à laver de la revendication 11, dans lequel :
la broche (50, 80, 90) comprend une première zone de métal de soudure (52), qui s'étend depuis la tête de broche (58) et soudée par métal au trou d'accouplement (62), et une deuxième zone de métal de soudure (53), qui s'étend, de manière inclinée, par rapport à la surface extérieure de la première zone de métal de soudure (52) et soudée par métal au trou d'accouplement (62).

15. Procédé d'assemblage du contrepoids de la machine à laver de la revendication 11, comprenant en outre :
la broche (50, 80, 90) est fixée au bossage (60) en utilisant un métal de soudure par ultrasons.
